(19) Europäisches Patentamt
European Patent Office
Office européen des brevets

(11) Veröffentlichungsnummer: **0 389 905 A1**

# (12) EUROPÄISCHE PATENTANMELDUNG

(21) Anmeldenummer: **90105079.9**

(51) Int. Cl.5: **C08L 81/02**

(22) Anmeldetag: **17.03.90**

(30) Priorität: **30.03.89 DE 3910277**

(43) Veröffentlichungstag der Anmeldung:
**03.10.90 Patentblatt 90/40**

(84) Benannte Vertragsstaaten:
**BE DE ES FR GB IT**

(71) Anmelder: **BAYER AG**

**D-5090 Leverkusen 1 Bayerwerk(DE)**

(72) Erfinder: **Köhler, Karl-Heinz Dr.**
**Buschstrasse 165**
**D-4150 Krefeld(DE)**
Erfinder: **Piejko, Karl-Erwin, Dr.**
**Unterscheider Weg 7a**
**D-5060 Bergisch Gladbach 2(DE)**
Erfinder: **Wehnert, Wolfgang, Dr.**
**Bodelschwinghstrasse 14**
**D-4150 krefeld(DE)**
Erfinder: **Lindner, Christian, Dr.**
**Im Wasserblech 11**
**D-5000 Köln 91(DE)**
Erfinder: **Morbitzer, Leo, Dr.**
**Rungestrasse 50**
**D-5000 Köln 80(DE)**
Erfinder: **Rempel, Dieter, Dr.**
**Max-Beckmann-Strasse 35**
**D-5090 Leverkusen 1(DE)**

## (54) Elastomermodifizierte Polyarylensulfid-Formmassen.

(57) Die Erfindung betrifft thermoplastische Massen aus Polyarylensulfiden (PAS), vorzugsweise Polyphenylensulfiden (PPS), und teilchenförmigen, vernetzten Silikonkautschuken.

EP 0 389 905 A1

# Elastomermodifizierte Polyarylensulfid-Formmassen

Die Erfindung betrifft thermoplastische Massen aus Polyarylensulfiden (PAS), vorzugsweise Polyphenylensulfiden (PPS), und teilchenförmigen, vernetzten Silikoankautschuken.

Teilkristalline Polyarylensulfide, z. B. Polyphenylensulfid, besitzen Eigenschaften, die für bestimmte Anwendungen nachteilig sind, wie z. B. eine geringe Dehnbarkeit und eine geringe Zähigkeit.

Solche Anwendungen betreffen z. B. Formteilkonstruktionen, die Schnappverbindungen enthalten, oder Formteile, die in der Nachbehandlung eine Umbördelung des Formteilrandes erfordern, oder Kabelummantelungen für enge Kabelkrümmungsradien. Bei diesen Anwendungen, bei denen Formteile ein- oder mehrmalig stärkeren Verbiegungen oder Schlagbelastungen ausgesetzt sind, sollen sie ihre ursprünglichen Eigenschaften nicht verlieren.

Polyarylensulfide geringer Kristallinität, z. B. überwiegend amorphe, wie z. B. Polydiphenylsulfonsulfid oder Copolyphenylensulfide mit hohen Anteilen an m-Phenylensulfid-Einheiten, zeigen die genannten Eigenschaftsdefizite nur in geringem Maße. Jedoch haben diese Polymere dann kaum noch typische Eigenschaften, die auf der Kristallinität des Polymeren beruhen.

Es ist bekannt, teilkristalline Thermoplaste durch Einbringen von Pfropfkautschuken so zu modifizieren, daß deren Zähigkeit verbessert wird, ohne die übrigen Eigenschaften wesentlich zu ändern. Solche Pfropfkautschuke basieren häufig auf Dien- bzw. Acrylat-Kautschuk-Grundlagen. Polyarylensulfide können durch Einbringen solcher Polymerisate modifiziert werden (z. B. EP-A 247 412, DE-A 3 616 131). Diese sind für Polyarylensulfide, insbesondere für PPS, weniger gut geeignet, da bei den notwendigen hohen Verarbeitungstemperaturen irreversible Schäden auftreten können. Ihre Wirkung geht weitgehend verloren. So modifizierte Polyarylensulfid-Formmassen haben eine intensive Dunkelfärbung nach hoher Temperatur-Belastung.

Es wurde nun gefunden, daß Polyarylensulfide (PAS), vorzugsweise Polyphenylensulfid (PPS), mit Hilfe von speziellen vernetzten, teilchenförmigen Silikon-Pfropfkautschuken modifiziert werden können. Es lassen sich Polymermischungen in beliebigen Verhältnissen herstellen, wobei Zähigkeit und Dehnbarkeit verbessert werden. Festigkeit und Wärmeformbeständigkeit können in Abhängigkeit von der Menge an zugesetzten Pfropfkautschuk auf einem ausreichend hohen Niveau eingestellt werden. Die erfindungsgemäß eingesetzten Silikon-Kautschuke bewirken insbesondere in verstärkten Polyphenylensulfid-Compounds ein strukturviskoses Schmelzefließverhalten. Diese Strukturviskosität ist nicht auf PPS-Compounds begrenzt und wird unabhängig von der Art und Menge der enthaltenen Füll- bzw. Verstärkungsstoffe beobachtet.

Gegenstand der Erfindung sind daher Polyarylensulfid-Formmassen, vorzugsweise Polyphenylensulfid-Formmassen, enthaltend

A. 0,5 Gew.-% bis 70 Gew.-%, bezogen auf das Gesamtgewicht der Formmasse, vernetzte, teilchenförmige Polysiloxan-Pfropfkautschuke und gegebenenfalls

B. 0 bis 60 Gew.-%, bezogen auf das Gesamtgewicht der Formmasse, Füll- und Verstärkungsstoffe.

Erfindungsgemäß verwendbare Polyarylensulfide sind bekannt (z. B. US-A 3 354 129, EP-A 171 021) und handelsüblich. Die Polyarylensulfide können linear, verzweigt oder vernetzt sein. Verzweigungen bzw. Vernetzungen können durch multifunktionelle Monomere in der Polyarylensulfid-Synthese oder durch geeignete Nachbehandlungen des überwiegend linearen Polyarylensulfids eingestellt werden.

Geeignete Polyarylensulfide sind z. B.: Polyphenylensulfide, Poly-(alkylenphenylen)-sulfide, Polydiphenylensulfide, Polytetraphenylensulfide, Polynaphthylensulfide, Polyketonsulfide, Polysulfansulfide, Polyarylensulfide mit heterocyclischen Monomereinheiten bzw. Co-Polyarylensulfide. Bevorzugte Polyarylensulfide sind teilkristalline Polyarylensulfide; besonders bevorzugt ist Poly-1,4-phenylensulfid.

Die Schmelzviskositäten der eingesetzten Polyarylensulfide liegen bei verstärkten Compounds zwischen 20 und 170 Pa.s (320 °C, $10^3$ 1/s), vorzugsweise zwischen 35 und 80 Pa.s, bei unverstärkten Compounds zwischen 60 und 300 Pa.s (320 °C, $10^3$ 1/s), vorzugsweise zwischen 80 und 200 Pa.s.

Die Bestimmung der Schmelzviskositäten geschieht in einem handelsüblichen Hochdruckkapillarviskosimeter bei verschiedenen Schergeschwindigkeiten (1/s) bei einer Temperatur der Schmelze von 320 °C. Aus der erhaltenen Viskositätsfunktion wird der $\eta_M$-Wert (in Pa.s) bei $10^3$ (1/s) als Bezugswert angegeben.

Komponente A ist ein teilchenförmiger Pfropfkautschuk aus

A 1) 0,1 - 95 Gew.-Teilen, bevorzugt 1 - 90 Gew.-Teilen, einer Silikonkautschukgrundlage und

A 2) 5 - 99,5 Gew.-Teilen, bevorzugt 10 - 99 Gew.-Teilen, einer oder mehrerer Pfropfhüllen, die Polymerisate bzw. Copolymerisate von Monomeren aus der Reihe der Styrole, α-Methylstyrole, Acrylnitril, $C_1$-$C_4$-Vinylcarbonsäuren, $C_{1-8}$-Alkylacrylate und $C_{1-8}$-Alkylmethacrylate darstellen, mit Teilchengrößen ($d_{50}$-Werte) von 80 nm bis 800 nm, bevorzugt 100 nm bis 500 nm. [Zur Messung des Teilchendurchmessers siehe W. Scholtan und H. Lange, Kolloid-Zeitschrift und Zeitschrift für Polymere, 250 (1972), S. 787 -

796.]

Die Pfropfkautschuke A sind zumindest teilvernetzt und besitzen Gelgehalte größer 30 Gew.-%, insbesondere von 40 bis 98 Gew.-% (gemessen in Toluol bei 23 °C).

Die Silikonkautschukgrundlage A 1) ist vorzugsweise ein vernetzter Silikonkautschuk und enthält Einheiten der Formeln (I) - (IV)

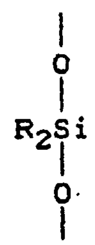 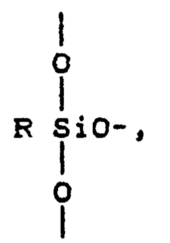 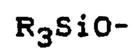 und 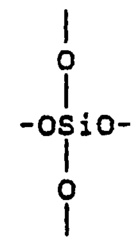

$(R_2SiO)$; $(RSiO_{3/2})$; $(R_3SiO_{1/2})$; $(SiO_2)$

(I), (II), (III) (IV)

in welchen

R einen einwertigen organischen Rest darstellt.

Als einwertige organische Reste sind $C_1$-$C_{40}$ organische Reste genannt, beispielsweise Alkylgruppen, vorzugsweise $C_1$-$C_{10}$-Alkyl, Arylgruppen, vorzugsweise $C_6$-$C_{24}$-Aryl, Alkylarylgruppen, vorzugsweise $C_7$-$C_{30}$-Alkylaryl, Arylalkylgruppen, vorzugsweise $C_7$-$C_{30}$-Aralkyl, $C_1$-$C_{20}$-Alkoxy, $C_1$-$C_{20}$-Thioalkyl, ungesättigte $C_2$-$C_{20}$-organische Reste u.s.w.

Besonders bevorzugt seien genannt: Methyl, Ethyl, tert.-Butyl, Phenyl, Methylphenyl, Bisphenyl, Phenylmethyl usw. Weiterhin seien genannt $C_1$-$C_{10}$-Alkoxy-Reste, radikalisch angreifbare Gruppen wie Vinyl- oder $\gamma$-Mercaptopropylreste.

Bevorzugt sind mindestens 80 % aller Reste R Methyl; insbesondere bevorzugt sind Kombinationen aus Methyl und Ethyl.

Auf 100 Mol Einheiten der Formel $R_2SiO$ kommen vorzugsweise 0 bis 10 Mol Einheiten der Formel $RSiO_{3/2}$, 0 bis 1,5 Mol Einheiten $R_3SiO_{1/2}$ und 0 bis 3 Mol Einheiten der Formel $SiO_2$.

Bevorzugte Silikonkautschuke A 1) enthalten eingebaute Einheiten radikalisch angreifbarer Gruppen. Diese sind zur Radikaladdition oder Übertragungsreaktion befähigt. Solche Gruppen sind vorzugsweise Vinyl-, Allyl-, Chloralkyl-, Mercaptogruppen, vorzugsweise in Mengen von 2 bis 10 Mol-%, bezogen auf die Reste R.

Die Pfropfhüllen A 2) bestehen aus Pfropfpolymerisaten, hergestellt aus Monomeren aus der Reihe der Styrole, $\alpha$-Methylstyrole, Acrylnitril, $C_1$-$C_4$-Vinylcarbonsäuren, Estern der Acryl- und/oder Methacrylsäure mit $C_{1-8}$-Alkoholen. Bevorzugt sind Monomere oder deren Mischungen, deren (Co)Polymerisate Glastemperaturen > 20 °C, insbesondere > 35 °C, aufweisen.

Bevorzugt sind beispielsweise Mischungen aus Styrol, $\alpha$-Methylstyrol mit Acrylnitril, $C_{1-4}$-Alkylmethacrylat, die bis zu 40 Gew.-% $C_{1-8}$-Alkylacrylate enthalten können und/oder Styrol, insbesondere Methylmethacrylat, im Gemisch mit Alkylacrylat.

Die Pfropfpolymerisate A) können auch mehrere Pfropfhüllen besitzen, von denen eine oder mehrere vernetzt sein können. Insbesondere sind solche Mehrstufenpfropfpolymerisate geeignet, die eine erste Hülle aus einem vernetzten Alkylacrylatkautschuk und eine zweite Hülle aus harzbildenden Monomeren wie oben beschrieben besitzen.

Die erste Hülle stellt dabei einen vernetzten Acrylatkautschuk dar und ist insbesondere ein vernetztes (Pfropf )-Polymerisat (überwiegend Pfropfpolymerisat) aus Acrylsäurealkylestern, gegebenenfalls in Mischung mit bis zu 40 Gew.-% anderen Vinylmonomeren. Zu den geeigneten polymerisierbaren Acrylsäureestern gehören $C_{1-8}$-Alkylester, beispielsweise Methyl-, Ethyl-, Butyl-, Octyl-und 2-Ethylhexylester, Halogenalkylester, bevorzugt $C_{1-8}$-Halogenalkylester, wie Chlorethylacrylat, und aromatische Ester wie Benzylacrylat und Phenethylacrylat. Sie können einzeln oder in Mischung eingesetzt werden, wobei im Falle einer Mischung mindestens ein Alkylester im Gemisch vorhanden sein soll. Zur Vernetzung werden zwei- oder mehrfunktionelle Monomere ("polyfunktionelle" Monomere) copolymerisiert.

Beispiele sind Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin, Alkylenbisacrylamide usw.

Besonders bevorzugte polyfunktionelle Monomere sind Triallylcyanurat, Triallylisocyanurat, Triallylphosphat, Allylmethacrylat. Die Menge der zur Vernetzung eingesetzten polyfunktionellen Monomere ist bevorzugt 0,05 bis 5,0 Gew.-% der Masse der ersten Hülle.

Die Pfropfpolymerisate A) sind bekannt (z. B. US-A 2 891 910, GB-A 1 024 024).

Der Silikonkautschukkern wird in eine Emulsion gebracht oder in Emulsion hergestellt. Dabei wird z. B. ein langkettiges, OH-terminiertes Silikonöl durch Emulsionspoly merisation (z. B. US-A 2 891 910, GB-A 1 024 024) in Gegenwart einer Alkylbenzolsulfonsäure oder n-Alkylsulfonsäure polymerisiert, gegebenenfalls in Gegenwart von weiteren Emulgiermitteln und Co-Emulgatoren. Nach erfolgter Polymerisation wird die Säure neutralisiert. Die Emulgiermittelkonzentration kann gering gehalten werden. Die hergestellte Emulsion hat wenig störende Fremdmoleküle (z. B. aus dem Katalysator) in dem fertigen Produkt.

Im allgemeinen sind solche Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichtes des bei der Emulsionspolymerisatian entstehenden OH-terminierten Silikonöls erfolgt z. B. weiterhin über die Temperatur bei der Gleichgewichtsbildung zwischen Siloxan, Wasser und dem durch Ringöffnung des Siloxans zunächst gebildeten Silanöls.

Der Einbau van radikalisch angreifbaren Gruppen in das bevorzugte Silikoncopolymer kann durch Umsetzung in Anwesenheit geeigneter Siloxanoligomerer erfolgen. Geeignete Ausgangsoligomere sind z. B. Tetramethyltetravinylcyclotetrasiloxan, $\gamma$-Mercaptopropylmethyldimethoxysilan oder dessen Hydrolysat.

Diese funktionellen Oligomere können dem Basisoligomer zur Copolymerisation, Octamethylcyclotetrasiloxan in den gewünschten Mengen beigefügt werden.

Analog kann auch der Einbau längerkettiger Alkylreste R, wie z. B. Ethyl-, Propyl- oder dergleichen, bzw. der Einbau von Phenylgruppen erreicht werden.

Die Silikonpfropfgrundlage muß wenigstens teilweise vernetzt sein.

Eine ausreichende Vernetzung kann stattfinden, indem z B. die bevorzugten eingesetzten Vinyl- und Mercaptopropylgruppen bei der Emulsionspolymerisation der Silikonbestandteile miteinander reagieren, so daß die Zugabe eines externen Vernetzers nicht erforderlich sein kann. Gegebenenfalls kann ein Vernetzung bewirkendes Silan zugefügt werden, um den Vernetzungsgrad des Silikonkautschukes zu erhöhen.

Der Einbau von Verzweigungen oder Vernetzungen kann durch Zugabe von z. B. Tetraethoxysilan oder eines Silans der allgemeinen Formel $RSiX_3$, wobei X eine hydrolysierbare Gruppe (z. B. ein Alkoxyrest) ist, erfolgen. R hat die im vorhergehenden beschriebene Bedeutung. Bevorzugt steht R für Methyl, Phenyl. Insbesondere bevorzugt sind neben Tetraethoxysilan Methyltrimethoxysilan oder Phenyltrimethoxysilan.

Die Pfropfpolymerisation der die Pfropfhüllen bildenden Monomere erfolgt in Gegenwart des Silikonkautschuklatex der 1. Stufe, indem die Monomere in dem Silikonlatex verteilt und in an sich bekannter Weise mit Hilfe radikalbildender Initiatoren polymerisiert werden. Bei der Herstellung mehrerer Pfropfhüllen werden die entsprechenden Monomere stufenweise zugesetzt und jeweils pfropfpolymerisiert.

Bei dieser Pfropfpolymerisation wird die Bildung neuer Teilchen möglichst weitgehend unterbunden. Ein Emulsionsstabilisator muß in zur Oberflächenbedeckung der Teilchen erforderlicher Menge vorhanden sein. Die Größe dieser Teilchen kann durch die Reaktionsführung in weiten Grenzen variiert werden. Verwendet man als Kern einen agglomerierten Latex, um große Teilchen zu erhalten, so können diese großen Teilchen mehrere kleine Silikonkautschukpartikel enthalten.

Im Falle von Mehrstufenpolymerisaten mit einer ersten Hülle aus Acrylatkautschuk kann man die Polymerisation der ersten Hülle auch so führen, daß Partikel mit Silikonkautschuk und gleichzeitig Partikel aus reinem vernetzten Acrylatkautschuk erzeugt werden. Solche Mischungen können zur Herstellung der erfindungsgemäßen Formmassen dienen.

Bei der Pfropfpolymerisation mit harzbildenden Monomeren zur Herstellung unvernetzter Pfropfhüllen bilden sich im allgemeinen neben dem Pfropfpolymerisat in bestimmtem Ausmaß freie unvernetzte Polymerisate aus diesen Monomeren. Die Menge dieses ungepfropften Polymerisats kann durch den Pfropfgrad bzw. die Pfropfausbeute charakterisiert werden. Sie hängt ab u. a. von den Polymerisationsbedingungen, der Zusammensetzung der Pfropfgrundlage und der Größe der zu pfropfenden Teilchen.

"Pfropfpolymerisat" im Sinne der Erfindung ist das durch Polymerisatian von Vinylmonomeren in Gegenwart des Kautschuklatex erhaltene Produkt, das Gemisch aus Pfropfpolymerisat und freiem Copolymerisat der Pfropfmonomere.

Die so hergestellten Pfropfpolymerisate können nach bekannten Verfahren aufgearbeitet werden, z. B. durch Koagulation der Latices mit Elektrolyten (Salze, Säuren oder Gemische davon). Sie können anschließend gereinigt und getrocknet werden.

Die Komponenten A können in Mengen von 0,5 bis 70 Gew.-%, bezogen auf Formmasse im Polyarylensulfid, enthalten sein. Bei Mitverwendung von Füll- und Verstärkungsstoffen werden vorzugsweise 5 bis 50 Gew.-%, besonders bevorzugt 10 bis 40 Gew.-%, ganz besonders bevorzugt 10 bis 30 Gew.-%, Komponente A eingesetzt.

In unverstärkten Polyarylensulfiden werden vorzugsweise 5 bis 40 Gew.-%, besonders bevorzugt 10 bis 30 Gew.-% und ganz besonders bevorzugt mit 15 bis 25 Gew.-%, Komponente A zugesetzt. Strukturviskoses Schmelzefließverhalten in unverstärkten bzw. verstärkten Polyarylensulfiden ist noch deutlich ausgeprägt, wenn 0,5 bis 20 Gew.-%, vorzugsweise 1 bis 15 Gew.-% und besonders bevorzugt 2 bis 10 Gew.-%, an Komponente A, bezogen auf Formmasse, eingesetzt werden.

Die erfindungsgemäß eingesetzten Komponenten A können auf verschiedener Weise in die Polyarylensulfid-Matrix eingebracht werden. Bevorzugt ist die Schmelzecompoundierung der Komponenten auf einem Zweiwellenextruder der Firma Werner & Pfleiderer oder einem Innenkneter.

Geeignete Füll- und Verstärkungsstoffe für Komponente B sind faserige- oder teilchenförmige Stoffe mit einer bei den Verarbeitungs- und Gebrauchstemperaturen der Polyarylensulfide ausreichenden Temperaturbeständigkeit. Beispiele für faserige Stoffe sind Glasfasern, Kohlefasern, Aramidfasern, Metallfasern usw..Beispiele für teilchenförmige Stoffe sind Kaolin, Gips, Kreide, Talkum, Glaskugeln, Glimmer, Quarz, Bariumsulfat, Metallpulver usw..Bevorzugte Verstärkungsfasern sind Glasfasern und Kohlefasern; bevorzugte Füllstoffe sind Quarz, Kaolin, Talkum, Glimmer.

Die Füll- und Verstärkungsmittel sowie andere übliche Additive werden durch Schmelzecompoundierung in die Polyarylensulfidformmassen eingebracht. Diese werden in Form von Granulaten auf üblichen Verarbeitungsmaschinen zu beliebigen Formkörpern thermoplastisch verarbeitet.

Die Prüfung mechanischer und thermischer Eigenschaften erfolgte an Norm-Prüfkörpern nach DIN- oder ASTM-Vorschriften. Die Messung der Schmelzviskositäten erfolgte an Granulaten auf einem Hochdruck-Kapillar-Viskosimeter; die Temperung erfolgte an Norm-Prüfkörpern und anschließend DIN-Prüfung.

## Beispiele

### 1. Herstellung der Silikonpfropfkautschuke

Anmerkung: Gew.-Tl. steht für Gew.-Teile

### 1.1 Silikonkautschukgrundlage

38,4 Gew.-Tl. Octamethylcyclotetrasiloxan, 1,2 Gew.-Tl. Tetramethyltetravinylcyclotetrasiloxan und 1 Gew.-Tl. $\gamma$-Mercaptopropylmethyldimethoxysilan werden miteinander verrührt. 0,5 Gew.-Tl. Dodecylbenzolsulfonsäure werden zugefügt, anschließend 58,4 Gew.-Tl. Wasser innerhalb 1 h zudosiert. Dabei wird intensiv gerührt. Die Voremulsion wird mit Hilfe einer Hochdruckemulgiermaschine zweimal bei 200 bar homogenisiert. Man gibt weitere 0,5 Gew.-Tl. Dodecylbenzolsulfonsäure zu.

Die Emulsion wird 2 h bei 85 °C und anschließend 36 h bei Raumtemperatur gerührt. Neutralisiert wird mit Hilfe 1N-NaOH. Es resultieren 100 Gew.-Tl. einer stabilen Emulsion mit einem Feststoffgehalt van ca. 37 % (bestimmt nach DIN 53 182). Die Teilchengröße beträgt 285 nm (Mittelwert $d_{50}$). Der Gelgehalt des Polymers beträgt 83 Gew.-% (in Toluol gemessen).

### 1.2 Silikonkautschukgrundlage mit einer vernetzten Acrylathülle

In einem Reaktor werden unter leichtem Stickstoffstrom 1960 Gew.-Tl. der Silikonemulsion 1.1 und 115 Gew.-Tl. Wasser vorgelegt und auf 70 °C erwärmt. Dazu fügt man eine Lösung aus 2 Gew.-Tl. Kaliumperoxodisulfat und 80 Gew.-Tl. Wasser. Bei 70 °C werden anschließend die folgenden Zuläufe gleichmäßig innerhalb 5 h zudosiert:

Zulauf 1: 310 Gew.-Tl. n-Butylacrylat

0,9 Gew.-Tl. Triallylcyanurat

Zulauf 2: 6,5 Gew.-Tl. Natriumsalz van $C_{14}$-$C_{18}$-Alkylsulfonsäuren

400 Gew.-Tl. Wasser

Nach Beenden der Zudosierung wird 4 h bei 70 °C nachgerührt. Es wird ein Latex mit einem Feststoffgehalt von 36 % erhalten.

1.3 Silikonpfropfkautschuke A

A 1: In einem Reaktor werden unter Stickstoff 5.250 Gew.-Tl. der Emulsion 1.2 und 400 Gew.-Tl. Wasser vorgelegt. Bei 70 °C fügt man eine Lösung aus 3,6 Gew.-Tl. Kaliumperoxodisulfat und 135 Gew.-Tl. Wasser zu. Anschließend werden folgende Zuläufe innerhalb 4 h gleichmäßig zudosiert:

Zulauf 1: 729 Gew.-Tl. Methylmethacrylat

81 Gew.-Tl. n-Butylacrylat

Zulauf 2: 9 Gew.-Tl. Natriumsalz von $C_{14}$-$C_{18}$-Alkylsulfonsäuren

880 Gew.-Tl. Wasser

Es wird nach Beenden der Zudosierung noch 4 h bei 70 °C nachgerührt. Es wird ein Latex mit einem Feststoffgehalt von 36 % erhalten.

Das Pfropfpolymerisat wird durch Koagulation mit $MgSO_4$/Eisessig-Lösung bei 80 °C - 90 °C gefällt, gewaschen und getrocknet. Der Gelgehalt des Pfropfpolymerisates beträgt 91 % (in Toluol gemessen).

A 2 - A 5:

Man verfährt wie bei A 1. Als Zulauf 1 werden folgende Mischungen verwendet:

A 2: 810 Gew.-Tl. Styrol

A 3: 729 Gew.-Tl. Styrol

81 Gew.-Tl. Acrylnitril

A 3: 583 Gew.-Tl. Styrol

227 Gew.-Tl. Acrylnitril

A 3: 405 Gew.-Tl. Styrol

405 Gew.-Tl. p-Methylstyrol

Tabelle 1

| Einfluß der Temperatur-Belastung auf PPS-Compounds mit Silikon-Pfropfkautschuk im Vergleich zu Acrylat-Pfropfkautschuk | | | |
|---|---|---|---|
| | 1 | 2 | 3 |
| PPS [1]<br>Si-Pfropfkautschuk A 1 [2]<br>Acrylat-Pfropfkautschuk [3] | 100<br>-<br>- | 80<br>20<br>- | 80<br>-<br>20 |
| $a_n$ (kJ/m²) [4]<br>$a_m$ (kJ/m²) [5]<br>$E_B$ (%) [6]<br>Biege-E-Modul (MPa.)<br>HDT-A (°C) [7] | 31<br>4,0<br>5,0<br>3.600<br>113 | 75<br>5,2<br>6,3<br>2.400<br>104 | 60<br>5,0<br>5,6<br>2.300<br>103 |
| Temperung bei 260 °C, 24 h | | | |
| $a_n$ (kJ/m²) [4]<br>Farbe des Prüfkörpers | 20<br>braun | 22<br>hellbraun | 10<br>schwarz |

1) Polyphenylensulfid Fa. Bayer AG, "Tedur", $\mu_M$: 168 Pa.s (320 °C/10³.1/s)
2) A1: s. Kap. 1.3.
3) Pfropf-Kautschuk auf Acrylat-Basis; Kh 330, Fa. Rohm & Haas
4) Izod-Schlagzähigkeit
5) Izod-Kerbschlagzähigkeit
6) Randfaser-Dehnung
7) Wärmeformbeständigkeit nach Iso 75 A

Tabelle 2

Einfluß verschiedener Pfropfkautschukhüllen auf die mechanischen Eigenschaften der Compound mit PPS

| | 1 | 2 | 3 | 4 | 5 |
|---|---|---|---|---|---|
| PPS (170 Pa.s) | 100 | 80 | 80 | 80 | 80 |
| - | | | | | |
| Si-KA A2 | - | 20 | - | - | - |
| Si-KA A3 | - | - | 20 | - | - |
| Si-KA A4 | - | - | - | 20 | - |
| Si-KA A5 | - | - | - | - | 20 |
| $a_n$ (kJ/m²) 1) | 17 | 32 | 31 | 25 | 27 |
| $a_k$ (kJ/m²) 2) | 6,0 | 6,9 | 7,1 | 6,8 | 6,9 |
| Biege-E-Modul (MPa.s) | 3.600 | 2.100 | 2.100 | 2.100 | 2.100 |
| HDT-A (°C) 3) | 106 | 98 | 98 | 99 | 98 |

A2:
A3: } s. 1.3.
A4:
A5:

1) Schlagzähigkeit nach Izod
2) Kerbschlagzähigkeit nach Izod
3) Wärmeformbeständigkeit Iso 75

Tabelle 3

Einfluß von Silikon-Pfropfkautschuk auf die Schmelzviskosität von verstärkten PPS-Compounds

| | 1 | 2 |
|---|---|---|
| PPS (40 Pa.s) [1] | 40 | 35 |
| Quarzmehl [2] | 60 | 55 |
| Si-PfropfKautschuk A 1 [3] | - | 10 |
| $\mu_M$ (320° C) (Pa.s) [4] | | |
| $\gamma$ : $10^2$ (1/s) | 80 | 350 |
| $10^3$ (1/s) | 46 | 100 |
| $10^4$ (1/s) | 33 | 34 |

[1] Polyphenylensulfid der Bayer AG, $\mu_M$ (320° C) : 40 Pa.s ($10^3$ $\gamma$)
[2] Silbond, Quarzwerke Frechen
[3] A1: s. 1.3.
[4] Schmelzviskosität bei 320° C in Pa.s, gemessen bei unterschiedlichem Schergefälle $\gamma$ (1/s).

**Ansprüche**

1. Polyarylensulfid-Formmassen aus
A) 0,5 - 70 Gew.-%, bezogen auf Formmasse, an vernetzten, teilchenförmigen Polysiloxan-Pfropfkautschuken
B) 0 - 60 Gew.-%, bezogen auf Formmasse, an Füll-und Verstärkungsstoffen.

2. Formmassen nach Anspruch 1, dadurch gekennzeichnet, daß die Polyarylensulfide teilkristallin sind.

3. Formmassen nach Anspruch 1 bis 2, dadurch gekennzeichnet, daß die Schmelzviskosität der Polyarylensulfide größer als 20 Pa.s (320° C, $10^3$ 1/s) ist.

4. Formmassen nach Anspruch 1, dadurch gekennzeichnet, daß der Anteil an Silikon-Pfropfkautschuk 5 bis 50 Gew.-%., bezogen auf Formmasse, beträgt.

5. Formmassen nach Anspruch 1, dadurch gekennzeichnet, daß der Anteil an Silikon-Pfropfkautschuk 5 bis 35 Gew.-%, bezogen auf Formmasse, beträgt.

6. Verwendung von Formmassen nach Anspruch 1 zur Herstellung geformter Körper.

Europäisches Patentamt

# EUROPÄISCHER RECHERCHENBERICHT

Nummer der Anmeldung

EP 90 10 5079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 247 412 (BAYER)<br>* Ansprüche; Seite 1, Zeilen 20-35 *<br>--- | 1-6 | C 08 L 81/02 |
| A | EP-A-0 142 825 (PHILLIPS PETROLEUM)<br>* Ansprüche 1-4,12 *<br>--- | 1,6 | |
| A | EP-A-0 090 922 (BAYER)<br>* Ansprüche *<br>--- | 1,6 | |
| A | EP-A-0 103 869 (PHILLIPS PETROLEUM)<br>* Anspruch 1 *<br>----- | 1 | |
| | | | RECHERCHIERTE SACHGEBIETE (Int. Cl.5) |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| BERLIN | 05-06-1990 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)